# EUROPEAN PATENT SPECIFICATION

(11) **EP 3 569 898 B1**
(45) Date of publication and mention of the grant of the patent: **26.10.2022**
(21) Application number: 18425035.5
(22) Date of filing: 14.05.2018
(51) Int. Cl.: F16J 15/10, F16L 37/23

(54) **GASKET FOR QUICK COUPLINGS AND QUICK COUPLING COMPRISING SAID GASKET**
DICHTUNG FÜR SCHNELLKUPPLUNGEN UND SCHNELLKUPPLUNG MIT BESAGTER DICHTUNG
JOINT D'ÉTANCHÉITÉ POUR COUPLAGES RAPIDES ET COUPLAGE RAPIDE COMPRENANT LEDIT JOINT

(43) Date of publication of application: 20.11.2019
(73) Proprietor: Faster S.R.L., 26027 Rivolta d'Adda (IT)
(72) Inventor: Rossetti, Daniele, 26027 Rivolta d'Adda (CR) (IT); Polgati, Igor, 26027 Rivolta d'Adda (CR) (IT)
(74) Representative: Lualdi, Lorenzo

(56) References cited:
- EP-A1- 2 428 717
- EP-A1- 3 112 728
- US-A1- 2016 201 830
- US-S- D 655 797

## Description

### FIELD OF THE INVENTION

The present invention relates to a gasket for quick couplings and a quick coupling comprising such a gasket.

More particularly, the present invention relates to a gasket for sealing the front valve of a male quick coupling for the quick connection of hydraulic lines.

It is also an object of the present invention a quick coupling, in particular a male coupling, comprising such an improved configuration gasket.

### PRIOR ART

Quick couplings are known, in particular male quick couplings intended to be coupled to a corresponding female quick coupling, provided with a front valve. Said front valve constitutes the valve for intercepting the axial channel of the coupling.

The seal of this valve is generally ensured by the provision of a circular section toroidal gasket, the classic O-Ring.

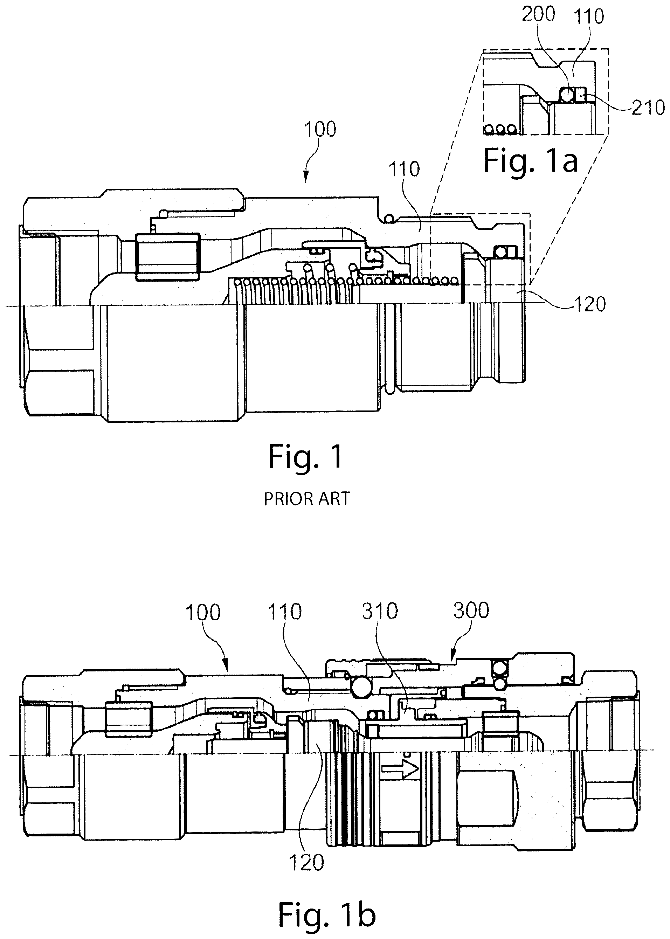

The situation is illustrated in figure 1 and in the enlargement in figure 1a, while figure 1b shows the final connection step of the male quick coupling **100** and of the female quick coupling **300.**

According to what is known from the prior art, in a male coupling **100** O-ring gasket **200** of the known type is arranged on the outer cylinder body **110,** placed between said outer cylindrical body **110** and the valve body **120,** so as to ensure the fluid seal of these two elements also when the valve body **120** slides longitudinally with respect to the outer body **110.**

A typical rather cumbersome application of the quick couplings of the type considered herein is represented, for example, by the so-called heavy duty applications in the field of earth-moving machines.

In this specific application, as well as in other comparable ones, a high mechanical resistance is required for quick couplings, which must also be combined with a perfect tightness of the coupling in all possible positions of use and in all possible pressure conditions.

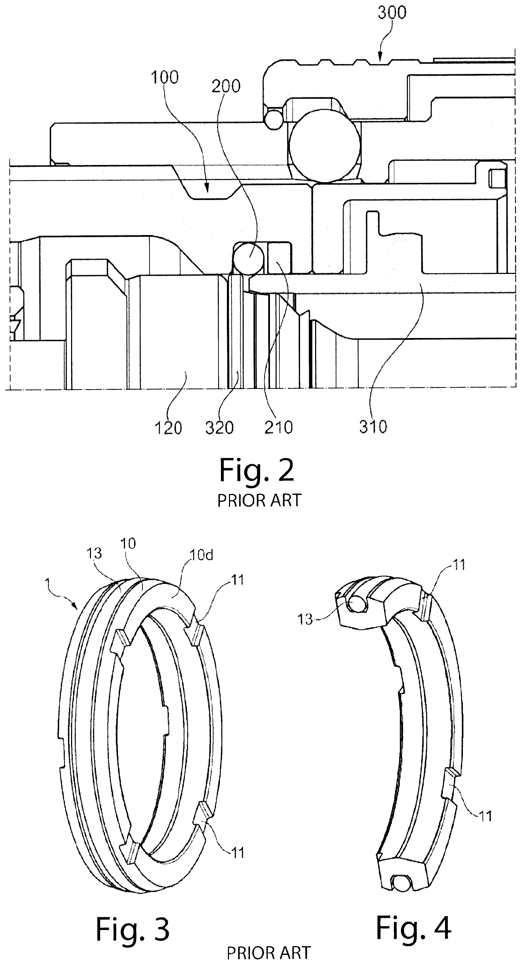

With particular reference to figure 2, in which a connection step of the male coupling **100** in a female coupling **300** is shown, it is noted that during the connection step and, in particular, in the case where there is a residual pressure in the male chamber in which the valve body **120** is housed, the gasket **200** is subjected to a stress which tends to deform it until there is the risk that it may be "guillotined", i.e. tightened between the valve body **320** of the female coupling **300** and the inner slider **310** of the female coupling itself.

It is known, in order to avoid or at least reduce the risk of extrusion of the gasket **200** during the operation of the coupling, to provide an anti-extrusion ring **210,** however this expedient does not completely eliminate the problems of extrusion and crushing of the O-Ring, which deforms into the plastic field and loses all the fluid sealing capacity.

There is therefore the problem of ensuring the seal and therefore the perfect operation of the gasket identified above, avoiding at the same time the crushing and the extrusion of the gasket itself.

In addition, the gasket seal must be ensured also in the presence of lateral loads (bending phenomena) due to the weight of the tube connected to the coupling and in the presence of high pressure when the coupling is connected (high pressures generally mean 350 bar and further) also in the presence of square wave pulse pressure.

Moreover, one of the technical problems that the sealing gasket considered herein must solve consists in having to ensure a perfect seal irrespective of the spatial (horizontal/vertical) orientation of the coupling itself.

In order to solve this and other drawbacks affecting the known solutions which provided for the use of O-Ring gaskets for sealing the valve body of a male coupling, the same Applicant developed a new type of gasket described in the European patent application EP 3 112 728 A1.

The solution shown in this patent application had the purpose of providing a gasket which particularly solved the problem of the extrusion of the gasket itself, above all, but not only, in the critical transitional step in which the valve body **120** of the male **100** fits into the slider of the female coupling **310.**

The improved gasket described in EP 3 112 728 A1 is shown in figures 3 and 4 attached to the present patent application.

The gasket **1** has a substantially toroidal shape comprising a main body **10** preferably made of polyurethane (PUR) and preferably obtained by moulding. The outer surface of the gasket has a circumferential seat adapted to contain an O-ring, indicated in the figures with reference numeral **13.** The outer surface of the gasket **1** has a non-flat but conical profile. The conical profile is interrupted centrally by the presence of the circumferential groove for housing said O-Ring **13,** which makes the gasket more elastic and flexible, so that it can follow more faithfully the profile of the valve body **120** of the male coupling and valve body **320** of the female coupling and/or of the inner slider **310** of the female coupling during their relative sliding (during the connection and disconnection steps), thus ensuring the fluid seal. Moreover, such a gasket **1** according to patent application EP 3 112 728 A1 comprises at least one groove or flaring **11** having the function of draining the fluid.

The presence of the slits **11** on the sides of the gasket **1** allows balancing the lateral forces generated by the oil pressure.

Although the improved gasket that was the subject of the prior patent application on behalf of the same Applicant resolved in an appreciable manner the extrusion problems for which it was conceived, mass production and the use in critical conditions of said gasket have revealed some critical issues.

In particular, it has been found that during the assembly step of the gasket to the valve body of the coupling, the movement necessary to fit the gasket in place forces the operator to bend it, thus favouring the possibility of the O-Ring **13** coming out.

Although the assembler can pay attention to this problem, because of this risk, the assembly operation involves a loss of time that affects the costs of the final product, and does not however give a total guarantee of the goodness of the assembly.

A further drawback affecting the gasket of the known type consists in a series of problems encountered during use, particularly in conditions of high temperature, of some types of couplings, for example of FHV couplings (screw flat face couplings suitable for the construction sector).

More specifically, it was found that the introduction of the shaped polyurethane gasket with O-Ring gave important positive results in the use on the vast majority of applications.

In fact, extrusion problems were solved during use and the overall performance of the couplings improved, but oil leakage was observed on particularly heavy applications.

After numerous and in-depth research and analysis of the couplings which encountered problems during use, the main cause of these failures has been identified in the oil temperature of the system that mounts the FHV couplings, where oil temperatures even higher than 100°C can be reached, indicated by the manufacturer and by the present Applicant as the maximum limit for the operating temperature, which is limited by the behaviour of the gasket.

In fact, in the vicinity of the maximum stated operating temperature, there is a decay of the mechanical properties of the material of which the gasket is made, and a consequent deterioration of the performance thereof.

By losing the properties of mechanical resistance that distinguish it, the gasket, subjected to very high forces by the oil under pressure, is permanently deformed in the necking zone of the lateral discharges **11,** thus favouring the escape of the O-Ring **13** which ensures the elasticity of the gasket itself.

By losing the (upper) sealing point of the gasket between the valve body **120** and the outer body **110,** the sealing point consisting of the O-Ring 13, the natural consequence is the loss of oil.

In light of the foregoing, the task of the present invention is to solve the described drawbacks affecting gaskets of the known type of male quick couplings of the type considered.

Within this task, the object of the improved gasket according to the present invention is to solve the problems of high temperature assembly and leaking of the O-Ring present in the gasket of the type known from EP 3 112 728 A1.

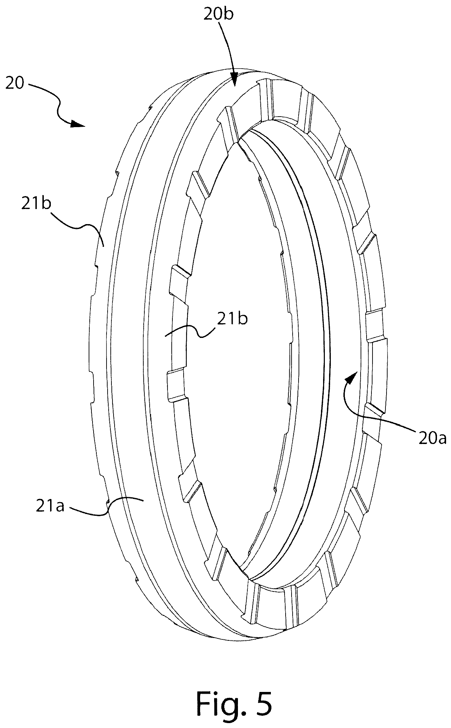

A further object of the present invention is that of preventing the necking of material at the discharges of the gasket (as shown in figure 5) and the consequent deformation of the material.

Last but not least, it is an object of the present invention to provide an improved gasket which is capable of withstanding high oil operating temperatures, even higher than 100°C, for use in particular applications.

The aforementioned task, as well as the aforementioned and other objects which will become better apparent hereinafter, are achieved by a gasket for the front valve body of a male quick coupling according to the appended claim 1.

Further features of the gasket according to the invention are provided in the dependent claims, which also form an integral part of the present description. Further features and advantages will become apparent from the description of a preferred but non-exclusive embodiment of the improved gasket according to the present invention, shown by way of a non-limiting example with the aid of the accompanying drawings, in which:
figure 1 shows a male coupling provided with a front gasket consisting of an O-ring, according to what is known from the prior art;
figure 1b shows the male coupling of figure 1 coupled to a female coupling;
figure 2 shows a detail of the coupling of figure 1; figures 3 and 4 show a perspective view and a perspective sectional view, respectively, of the gasket known from EP 3 112 728 A12;
figure 5 shows an overall perspective view of the improved gasket according to the present invention; figure 6 shows a front view, partially sectional with a vertical plane, of the improved gasket according to the present invention;
figure 6A shows an enlargement of a detail of figure 6, in particular showing the profile of the inner surface and of the outer surface of the gasket on a radial cross-sectional plane;
figure 7 shows a lateral view of the improved gasket according to the present invention.

With particular reference to figures 5 to 7, a preferred embodiment of the gasket according to the present invention will hereinafter be illustrated. This description is given as a non-limiting example, therefore any variant that can be considered equivalent to what is described must be considered as falling within the scope of the present invention.

The gasket **20** for quick couplings according to the present invention is specifically designed to achieve the fluid seal of the valve body of male quick couplings, as described in the introductory part of the present description with reference to the type of couplings considered herein, shown by way of example in figures 1, 1b and 2 showing couplings provided with O-rings of the known type.

The gasket **20** according to the invention comprises a toroidal main body **21** which defines an inner surface **20a** and an outer surface **20b**.

The outer surface **20b** which in use implements the fluid seal against the outer cylindrical body **110** of the male coupling, while the inner surface **20a** of the gasket implements the fluid seal against the valve body **120** or against the inner slider **310** of the female coupling **300,** depending on the connection status.

In order to optimise the fluid seal in particular with the outer cylindrical body of the male coupling in which the gasket is mounted and in order to prevent the phenomena of extrusion of the O-Ring present in the gaskets of the known type, the gasket **20** according to the present invention provides for optimising the seal rather than using an O-ring, providing for a particular configuration of the outer surface **20b** of the gasket itself.

More particularly, the outer surface **20b** of the gasket is characterised in that it has a substantially three-lobed shape, in which a central portion **21a** is flanked by two lateral shoulders **21b,** said outer surface **20b** being three-lobed with a central portion **21a** protruding outwardly with respect to the lateral shoulders **21b.**

The gasket object of the present invention therefore allows disregarding the presence of the O-ring, thus avoiding at the same time the assembly problems and the problems of extrusion or escape of the O-ring itself, in particular at high temperatures.

The O-ring has been completely eliminated thanks to the specific "dome" configuration of the central portion **21a** of the outer surface **20b** of the gasket itself.

This new shape of the gasket ensures the seal while maintaining the flexibility necessary to allow the gasket to follow the valve profiles during the relative sliding of the components during the coupling and uncoupling steps of the couplings.

According to the invention, the outer surface **20b** has, on a radial cross-sectional plane, a symmetrical three-lobed profile with respect to a central symmetry plane **A** and in which said central portion **21a** of said outer surface 20b is laterally delimited by a pair of parallel grooves **21c** circumferentially separating said central portion **21a** from said lateral shoulders **21b.**

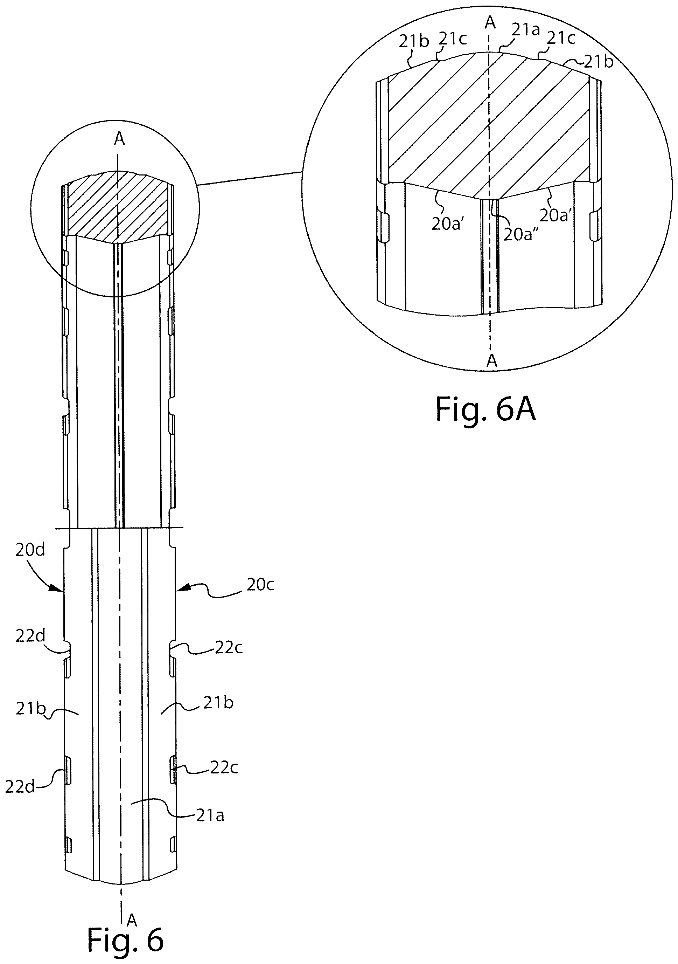

At the same time, the gasket according to the present invention provides that the inner surface **20a** of said gasket **20,** on a radial sectional plane, has a triangular profile with the vertex of the triangle facing inwards of the toroid. More in detail, with reference to figures 6 and 6A, the inner surface **20a** comprises, in section on a radial transverse plane, two inclined sides **20a'** with respect to the symmetry plane **A,** which are connected in a connecting portion **20a"** which defines a substantially flat portion of surface orthogonal to said vertical symmetry axis.

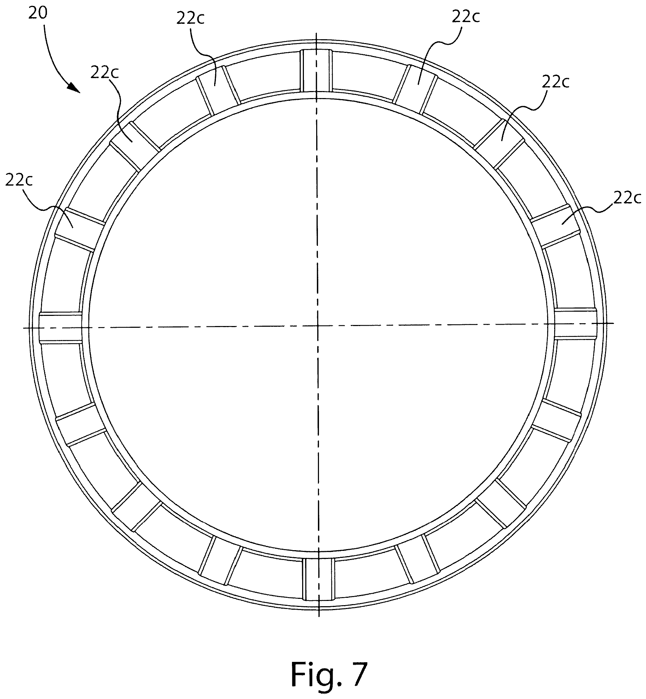

Again with reference to the above figures, and in particular with reference to figure 7, advantageously the gasket **20** according to the present invention is further characterised in that the toroidal main body **21** has a first lateral surface **20c** and a second lateral surface **20d** which face outwards, said first **20c** and second **20d** lateral surfaces each being provided with a plurality of grooves **22c, 22d** for draining the oil during use.

Said grooves are preferably quadrangular according to what is shown in the figures.

Moreover, again according to a preferred embodiment of the invention, each lateral surface 20c, 20d comprises a plurality of said grooves and in particular: the first lateral surface **20c** comprises a plurality of first grooves **22c** and the second lateral surface **20d** comprises a plurality of second grooves **22d.**

Preferably, said first **22c** and second **22d** grooves are positioned along respective lateral surfaces **20c, 20d** in corresponding positions.

In order to prevent the deformation of the gasket in the groove area, as has been seen following the use of the gasket in application fields which provide for a high oil temperature (above 100°C), the gasket according to the present invention is provided with a greater number of grooves **22c, 22d** whose depth is smaller than in the gaskets of the type known from the prior art.

For the volume of oil carried by these discharges not to decrease, creating potential imbalances of pressure rebalancing with consequent rotation of the gasket during the step of connection/disconnection of the couplings, the gasket according to the present invention provides a greater number of discharge grooves having each a depth smaller than what is known from the prior art.

In order to facilitate assembly operations, the discharge grooves are present on both sides of the gasket, so that the operator does not have to verify the mounting direction of the gasket, which is now perfectly symmetrical with respect to the central plane **A.** The gasket according to the present invention, made in a single body, can be installed in the coupling without the aid of particular tools, and the fact that it is perfectly symmetrical with respect to a central symmetry plane A allows the worker during assembly and the end customer in case the gasket needs to be replaced, a fail-safe installation. Advantageously, said first grooves **22c** and said second grooves **22d** have a radial orientation on said surfaces.

Due to the plurality of radial grooves **22c, 22d** provided, the stresses that the oil under pressure exerts on the gasket decrease, however the risk remains, even if limited, that the gasket is deformed due to the operating temperature of the oil, which remains the main cause of failures of gaskets of the known type that has been observed in the field.

The limit working temperature of the polyurethane used for the manufacture of the known type of gaskets currently used is of about 100°C, therefore, to prevent deformation of the gasket at the discharge grooves, the gasket according to the present invention provides at the same time the modification of the number and depth of the discharge grooves, and the use of a different type of material.

Within the market of thermoplastic polymers, the applicant has selected, after a long research phase followed by numerous tests on several samples that gave positive results during the impulse, thermal shock, burst, high capacity assembly and approval tests, etc., a specific thermoplastic polyurethane (TPU) has been selected that, due to its latest generation chemical composition, is able to guarantee constant working temperatures that are well beyond the standards offered by the market.

This material, as mentioned in conjunction with the specific configuration of the drainage grooves, allows ensuring the use of the gasket at constant use temperatures even up to 120°C.

It has thus been shown that the gasket according to the present invention allows achieving the task and the objects which the invention had set.

The present invention has been described, for illustrative and non-limiting purposes, according to a preferred embodiment thereof, but it is to be understood that variants and/or modifications may be made by a person skilled in the art without thereby departing from the relative scope of protection, as defined in the appended claims.

## Claims

1. Gasket (20) for quick couplings, in particular for the fluid seal of the valve body of male quick couplings, said gasket comprising a toroidal main body (21), in turn comprising an inner surface (20a) and an outer surface (20b), said outer surface (20b) comprising a central portion (21a) flanked by two lateral shoulders (21b), and said inner surface (20a) has, on a radial cross-sectional plane, a triangular profile with the vertex of the triangle facing inwards of the toroid, **characterised in that** said outer surface (20b) is three-lobed with a central portion (21a) protruding with respect to the lateral shoulders (21b), **in that** the gasket is made in a single body and is symmetrical with respect to a central symmetry plane (A) and **in that** said outer surface (20b) has, on a radial cross-sectional plane, a three-lobed profile (21a, 21b) symmetrical with respect to the central symmetry plane (A) and wherein said central portion (21a) of said outer surface (20b) is laterally delimited by a groove (21c), which separates said central portion (21a) from said lateral shoulders (21b).

2. Gasket (20) for quick couplings according to the preceding claim, **characterised in that** said inner surface (20a) comprises, in section on a radial transverse plane, two inclined sides (20a') with respect to the symmetry plane (A), which are connected in a connecting portion (20a'') which defines a substantially flat portion of surface orthogonal to said central symmetry plane (A).

3. Gasket (20) for quick couplings according to one or more of the preceding claims, **characterised in that** said toroidal main body (21) further comprises a first lateral surface (20c) and a second lateral surface (20d) which face outwards, said first (20c) and second (20d) lateral surfaces each being provided with a plurality of grooves (22c, 22d) for draining oil during use.

4. Gasket (20) for quick couplings according to the preceding claim, **characterised in that** said first lateral surface (20c) comprises a plurality of first grooves (22c), and that said second lateral surface (20d) comprises a plurality of second grooves (22d), said first (22c) and second (22d) grooves being positioned along the respective lateral surfaces (20c, 20d) in corresponding positions.

5. Gasket (20) for quick couplings according to the preceding claim, **characterised in that** said first grooves (22c) and said second grooves (22d) have a radial orientation.

6. Gasket (20) for quick couplings according to one or more of the preceding claims, **characterised in that** first grooves (22c) and said second grooves (22d) are in a number comprised between four and sixteen for each of said lateral surfaces (20c, 20d).

7. Gasket (20) for quick couplings according to one or more of the preceding claims, **characterised in that** it is made of a material belonging to the group of thermoplastic polymers.

8. Gasket (20) for quick couplings according to the preceding claim, **characterised in that** said material is thermoplastic polyurethane.

9. Quick coupling for the connection of hydraulic lines under pressure, **characterised in that** it comprises an improved gasket (20) according to one or more of the claims from 1 to 8.

## Patentansprüche

1. Dichtung (20) für Schnellkupplungen, insbesondere für die Fluiddichtung des Ventilkörpers von männlichen Schnellkupplungen, wobei die Dichtung einen toroidalen Hauptkörper (21) umfasst, der wiederum eine Innenfläche (20a) und eine Außenfläche (20b) umfasst, wobei die Außenfläche (20b) einen zentralen Abschnitt (21a) umfasst, der von zwei seitlichen Schultern (21b) flankiert wird, und wobei die Innenfläche (20a) auf einer radialen Querschnittsebene ein dreieckiges Profil aufweist, wobei der Scheitel des Dreiecks nach innen des Torus gerichtet ist, **dadurch gekennzeichnet, dass** die Außenfläche (20b) mit einem zentralen Abschnitt (21a), der in Bezug auf die seitlichen Schultern (21b) vorsteht, dreiteilig ist, dadurch, dass die Dichtung in einem einzigen Körper ausgebildet ist und symmetrisch in Bezug auf eine zentrale Symmetrieebene (A) ist, und dadurch, dass die Außenfläche (20b) auf einer radialen Querschnittsebene ein dreiteiliges Profil (21a, 21b) aufweist, das symmetrisch in Bezug auf die zentrale Symmetrieebene (A) ist, und wobei der zentrale Abschnitt (21a) der Außenfläche (20b) seitlich durch eine Nut (21c) begrenzt ist, die den zentralen Abschnitt (21a) von den seitlichen Schultern (21b) trennt.

2. Dichtung (20) für Schnellkupplungen nach dem vorhergehenden Anspruch, **dadurch gekennzeichnet, dass** die Innenfläche (20a) im Schnitt auf einer radialen Querebene zwei in Bezug auf die Symmetrieebene (A) geneigte Seiten (20a') umfasst, die in einem Verbindungsabschnitt (20a") verbunden sind, der einen im Wesentlichen flachen Oberflächenabschnitt orthogonal zu der zentralen Symmetrieebene (A) definiert.

3. Dichtung (20) für Schnellkupplungen nach einem oder mehreren der vorhergehenden Ansprüche, **dadurch gekennzeichnet, dass** der toroidale Hauptkörper (21) ferner eine erste Seitenfläche (20c) und eine zweite Seitenfläche (20d) umfasst, die nach außen weisen, wobei die erste (20c) und die zweite (20d) Seitenfläche jeweils mit einer Vielzahl von Nuten (22c, 22d) zum Ablassen von Öl während des Gebrauchs versehen sind.

4. Dichtung (20) für Schnellkupplungen nach dem vorhergehenden Anspruch, **dadurch gekennzeichnet, dass** die erste Seitenfläche (20c) eine Vielzahl von ersten Nuten (22c) umfasst und dadurch, dass die zweite Seitenfläche (20d) eine Vielzahl von zweiten Nuten (22d) umfasst, wobei die ersten (22c) und zweiten (22d) Nuten entlang der jeweiligen Seitenflächen (20c, 20d) in entsprechenden Positionen positioniert sind.

5. Dichtung (20) für Schnellkupplungen nach dem vorhergehenden Anspruch, **dadurch gekennzeichnet, dass** die ersten Nuten (22c) und die zweiten Nuten (22d) eine radiale Ausrichtung aufweisen.

6. Dichtung (20) für Schnellkupplungen nach einem oder mehreren der vorhergehenden Ansprüche, **dadurch gekennzeichnet, dass** die ersten Nuten (22c) und die zweiten Nuten (22d) in einer Anzahl zwischen vier und sechzehn für jede der Seitenflächen (20c, 20d) vorliegen.

7. Dichtung (20) für Schnellkupplungen nach einem oder mehreren der vorhergehenden Ansprüche, **dadurch gekennzeichnet, dass** sie aus einem Material besteht, das zur Gruppe der thermoplastischen Polymere gehört.

8. Dichtung (20) für Schnellkupplungen nach dem vorhergehenden Anspruch, **dadurch gekennzeichnet, dass** das Material thermoplastisches Polyurethan ist.

9. Schnellkupplung für die Verbindung von unter Druck stehenden Hydraulikleitungen, **dadurch gekennzeichnet, dass** sie eine verbesserte Dichtung (20) nach einem oder mehreren der Ansprüche 1 bis 8 umfasst.

## Revendications

1. Joint d'étanchéité (20) pour raccords rapides, en particulier pour l'étanchéité aux fluides du corps de soupape de raccords rapides mâles, ledit joint d'étanchéité comprenant un corps principal toroïdal (21), comprenant à son tour une surface interne (20a) et une surface externe (20b), ladite surface externe (20b) comprenant une partie centrale (21a) flanquée de deux épaulements latéraux (21b), et ladite surface interne (20a) possède, sur un plan radial en section transversale, un profil triangulaire avec le sommet du triangle faisant face vers l'intérieur du tore, **caractérisé en ce que** ladite surface externe (20b) est trilobée avec une partie centrale (21a) faisant saillie par rapport aux épaulements latéraux (21b), **en ce que** le joint d'étanchéité est formé en un seul corps et est symétrique par rapport à un plan de symétrie (A) central et **en ce que** ladite surface externe (20b) possède, sur un plan radial en section transversale, un profil trilobé (21a, 21b) symétrique par rapport au plan de symétrie (A) central et dans lequel ladite partie centrale (21a) de ladite surface externe (20b) est latéralement délimitée par une rainure (21c), qui sépare ladite partie centrale (21a) desdits épaulements latéraux (21b).

2. Joint d'étanchéité (20) pour raccords rapides selon la revendication précédente, **caractérisé en ce que** ladite surface interne (20a) comprend, en section sur un plan transversal radial, deux côtés inclinés (20a') par rapport au plan de symétrie (A), qui sont reliés dans une partie de liaison (20a") qui définit une partie de surface sensiblement plate orthogonale audit plan de symétrie (A) central.

3. Joint d'étanchéité (20) pour raccords rapides selon l'une ou plusieurs des revendications précédentes, **caractérisé en ce que** ledit corps principal toroïdal (21) comprend en outre une première surface latérale (20c) et une seconde surface latérale (20d) qui font face vers l'extérieur, lesdites première (20c) et seconde (20d) surfaces latérales étant chacune munies d'une pluralité de rainures (22c, 22d) pour drainer de l'huile pendant l'utilisation.

4. Joint d'étanchéité (20) pour raccords rapides selon la revendication précédente, **caractérisé en ce que** ladite première surface latérale (20c) comprend une pluralité de premières rainures (22c), et **en ce que** ladite seconde surface latérale (20d) comprend une pluralité de secondes rainures (22d), lesdites premières (22c) et secondes (22d) rainures étant positionnées le long des surfaces latérales (20c, 20d) respectives à des positions correspondantes.

5. Joint d'étanchéité (20) pour raccords rapides selon la revendication précédente, **caractérisé en ce que** lesdites premières rainures (22c) et lesdites secondes rainures (22d) possèdent une orientation radiale.

6. Joint d'étanchéité (20) pour raccords rapides selon l'une ou plusieurs des revendications précédentes, **caractérisé en ce que** les premières rainures (22c) et lesdites secondes rainures (22d) sont en nombre compris entre quatre et seize pour chacune desdites surfaces latérales (20c, 20d).

7. Joint d'étanchéité (20) pour raccords rapides selon l'une ou plusieurs des revendications précédentes, **caractérisé en ce qu'**il est constitué d'un matériau appartenant au groupe des polymères thermoplastiques.

8. Joint d'étanchéité (20) pour raccords rapides selon la revendication précédente, **caractérisé en ce que** ledit matériau est un polyuréthane thermoplastique.

9. Raccord rapide pour la liaison de conduites hydrauliques sous pression, **caractérisé en ce qu'**il comprend un joint d'étanchéité (20) amélioré selon l'une ou plusieurs des revendications 1 à 8.
